# EUROPEAN PATENT SPECIFICATION

(11) **EP 3 600 701 B1**
(45) Date of publication and mention of the grant of the patent: **13.08.2025**
(21) Application number: 18772212.9
(22) Date of filing: 21.03.2018
(51) Int. Cl.: B07C 5/04, B07C 5/342, G06T 7/60

(54) **SEED SORTING**
SAATGUTSORTIERUNG
TRI DE GRAINES

(30) Priority: 21.03.2017 US 201762474389 P
(43) Date of publication of application: 05.02.2020
(73) Proprietor: Monsanto Technology LLC, St. Louis, MO 63167 (US)
(72) Inventor: BECKER, Jennifer L., Saint Louis Missouri 63167 (US); BORROWMAN, Eric L., Saint Louis Missouri 63167 (US); CEGLINSKI, Jarrett R., Saint Louis Missouri 63167 (US); CHAUDHARY, Govind, Saint Louis Missouri 63167 (US); DEPPERMANN, Kevin L., Saint Louis Missouri 63167 (US); FAN, Xiaofei, Saint Louis Missouri 63167 (US); KOHNE, Jeffrey L., Saint Louis Missouri 63167 (US); WHITE, Brad D., Saint Louis Missouri 63167 (US); ZHANG, Chi, Saint Louis Missouri 63167 (US)
(74) Representative: BIP Patents
(86) International application number: PCT/US2018/023528
(87) International publication number: WO 2018/175555

(56) References cited:
- EP-B1- 2 588 255
- WO-A1-2016/133175
- US-A- 6 145 650
- US-A1- 2008 308 472
- US-A1- 2010 143 906
- US-A1- 2012 085 686
- US-A1- 2012 085 686
- US-A1- 2015 177 067

## Description

### FIELD

The present disclosure generally relates to a system and method for processing seeds, and more specifically, a seed sorting system and method for sorting seeds based on characteristics of the seed.

### BACKGROUND

In the agricultural industry, and more specifically in the seed breeding industry, it is important for scientists to be able to analyze seeds with high throughput. By this it is meant that the analysis of the seeds preferably occurs not only quickly, but also reliably and with high total volume. Historically, seeds are sorted by size using mechanical equipment containing screens with holes corresponding to predetermined sizes. Seed sorting is also conducted using image analysis of the seeds to detect certain appearance characteristics of the seeds. However, prior image analysis seed sorting systems are limited in their ability to detect the size, shape, and appearance of the seeds.

EP 2 588 255 B1 teaches a non-invasive solution for classifying objects contained in seed lots, that can be used for sorting of seeds randomly placed on a conveyor. EP 2 588 255 B1 suggests using pneumatic sorting in a generic manner but does not provide further information on how to implement a pneumatic sorting for high-speed seed sorting.

### SUMMARY

The invention is set out in the appended set of claims.

The seed sorting system for sorting seeds generally comprises a seed transfer station configured to move seeds through the system. An imaging assembly comprises a 2D camera configured to acquire 2D images of the seeds as the seeds move through the system and a 3D camera configured to acquire 3D images of the seeds as the seeds move through the system. A sorting assembly is configured to sort the seeds into separate bins based on the acquired 2D and 3D images of the seeds.

In another aspect, a method of sorting seeds using the seed sorting system generally comprises moving seeds through the system using a seed transfer station. Acquiring, using a 2D camera, 2D images of the seeds as the seeds move through the system via the seed transfer station. Acquiring, using a 3D camera, 3D images of the seeds as the seeds move through the system via the seed transfer station. Analyzing the 2D and 3D images to determine a parameter of each of the seeds. Sorting, using a sorting assembly, the seeds based on determined parameters of the seeds.

### BRIEF DESCRIPTION OF THE DRAWING

Fig. 1 is block diagram of an automated seed sorter system;
Fig. 2 is a front perspective of the seed sorter system with portions of a sorting assembly removed to show internal detail;
Fig. 3 is a rear perspective of the seed sorter system;
Fig. 4 is a fragmentary perspective of the seed sorter system;
Fig. 5 is a schematic illustration of a side view of the seed sorter system;
Fig. 5A is a schematic illustration of a top view of the seed sorter system;
Fig. 5B is a schematic illustration of a valve bank of the seed sorter system;
Fig. 6A is an image obtained by a 2D camera of the seed sorter system;
Fig. 6B is an image obtained by a 3D camera of the seed sorter system; and
Fig. 6C is surface profile produced from the image in Fig. 6B.

Corresponding reference characters indicate corresponding parts throughout the drawings.

### DETAILED DESCRIPTION

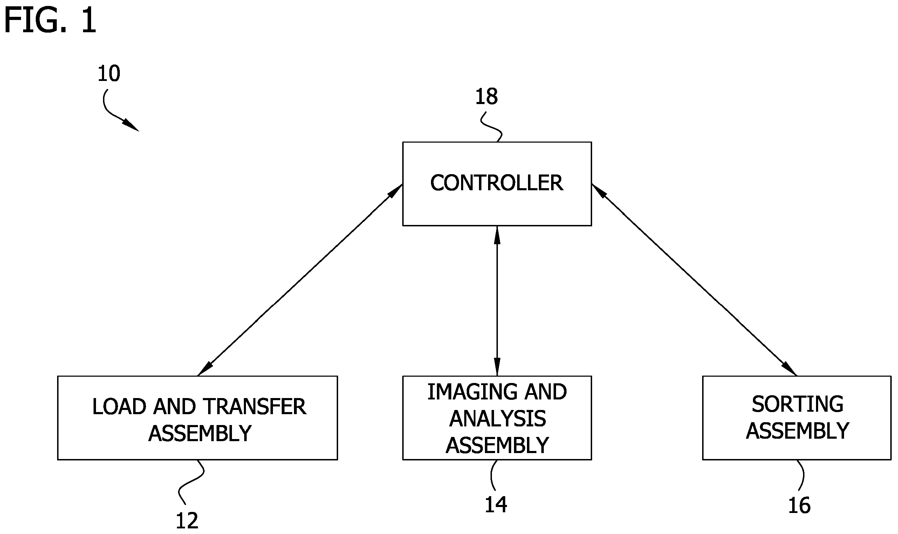

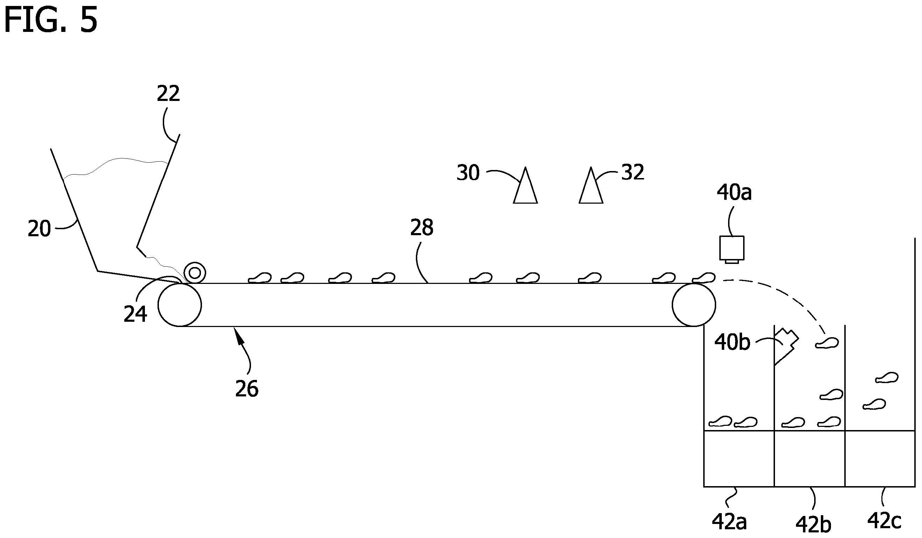

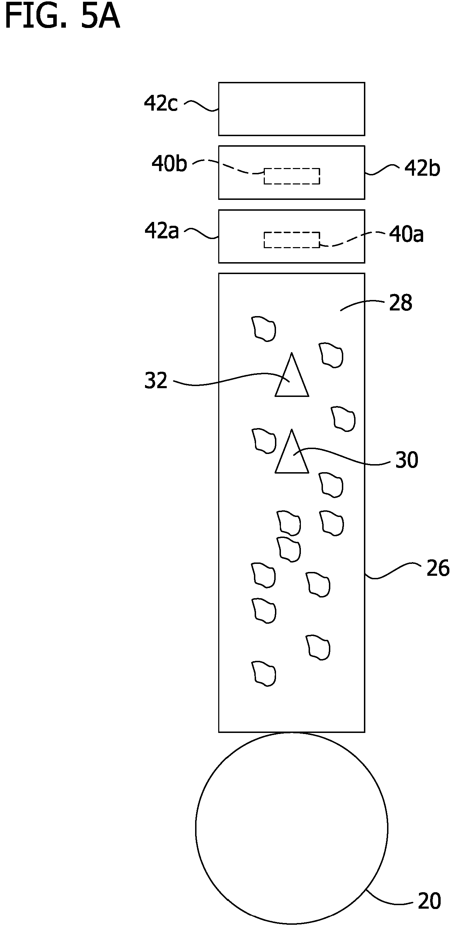

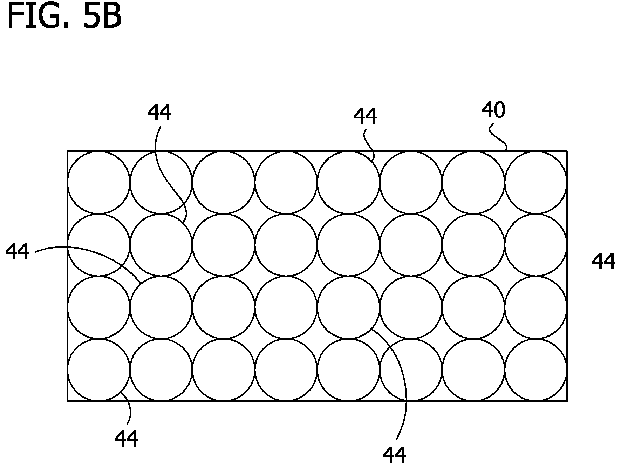

Referring to Figs. 1-5, a seed sorting system is indicated generally at 10. The system is configured to receive, analyze, and sort a plurality of seeds into selected categories for later processing, assessment, or analysis. The system 10 comprises a load and transfer assembly 12 configured to receive and deliver the seeds through the system, an imaging and analysis assembly 14 for collecting image data of the seeds as they are delivered through the system by the load and transfer assembly, and a sorting assembly 16 configured to sort the seeds into selected categories based on the image data collected for the seeds by the imaging and analysis assembly. A controller 18 (e.g., a processor and suitable memory) is programmed to operate the system 10. The imaging and analysis assembly 14 acquires 3-dimensional image data and incorporates optimized image analysis algorithms for providing rapid and highly accurate size and shape measurements of the seeds. The sorting assembly 16 is configured to sort the seeds into two or more selected categories so that the seeds can be more precisely categorized for later processing, assessment, or analysis. The imaging and analysis assembly 14 and the sorting assembly 16 allow the system to provide high throughput measurement of the seeds to meet real time seed sorting requirements. As such, the system 10 can be implemented into an existing seed processing system and quickly and seamlessly provide a seed sorting function.

Referring to Figs. 1-3 and 5, the load and transfer assembly 12 comprises a hopper (broadly, a seed loading station) 20 including an inlet 22 for receiving the seeds into the hopper and an outlet 24 for dispensing the seeds from the hopper, and a conveyor 26 (broadly, a seed transfer station) at the outlet of the hopper. In the illustrated embodiment, the conveyor 26 comprises a belt 28 defining a flat horizontal conveyor transport surface. The conveyor 26 provides a flat surface for the seeds to rest as they are delivered through the system 10. As a result, the system 10 is able to better control the travel of each seed through the system and therefore better track the position of the seeds as they move on the conveyor 26 because the seeds will remain in a substantially fixed orientation and position on the conveyor. In one embodiment, a high precision encoder (not shown) is incorporated into the system 10 to track the position of the seeds on the conveyor 26. As will be explained in greater detail below, the flat surface allows for more accurate measurements to be acquired by the imaging and analysis assembly 14. Moreover, the projectile motion of the seeds as they are expelled off an end of the conveyor 26 provides a predictable flight pattern of each seed which can be used to sort the seeds as will be explained in greater detail below.

The conveyor 26 may be a high-speed conveyor capable of operating at speeds of up to about 0,75 m/s (30 in/sec) and above. For example, the conveyor 26 can be operated at up to about 1,5 m/s (60 in/sec). Depending on the size of the outlet 24 of the hopper 20, the conveyor 26 can deliver the seeds through the system 10 at a rate of about 20 to 250 seeds/sec. However, other seed rates are envisioned. For example feed rates of up to 2000 seeds/second are envisioned. Feed rates of higher than 2000 seeds/second are also envisioned. In one embodiment, the conveyor 26 is blue. The color blue has been found to provide a desired background contrast for obtaining clear images of the seeds. For example, the blue background has been found to provide a desired contract with the yellow color of the seeds. However, the conveyor can be other colors without departing from the scope of the disclosure.

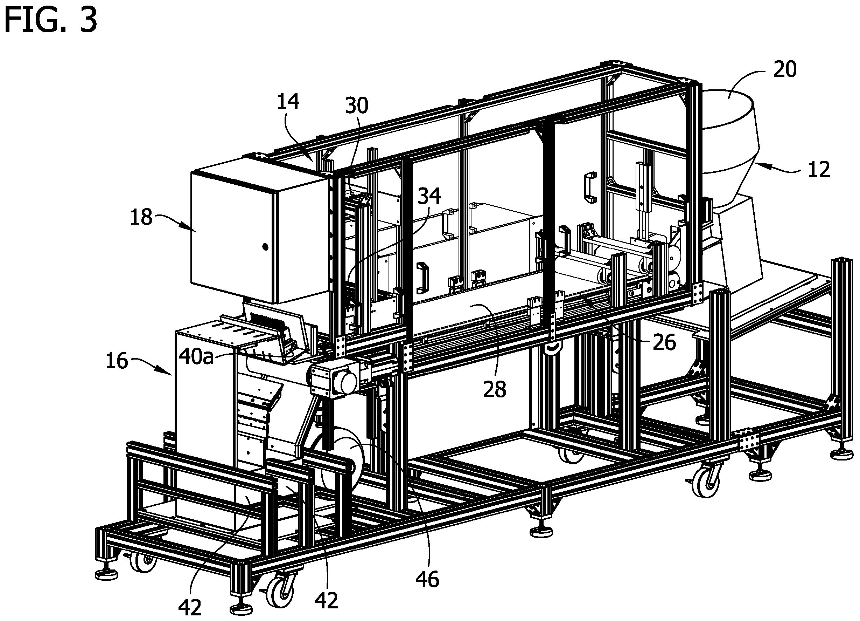

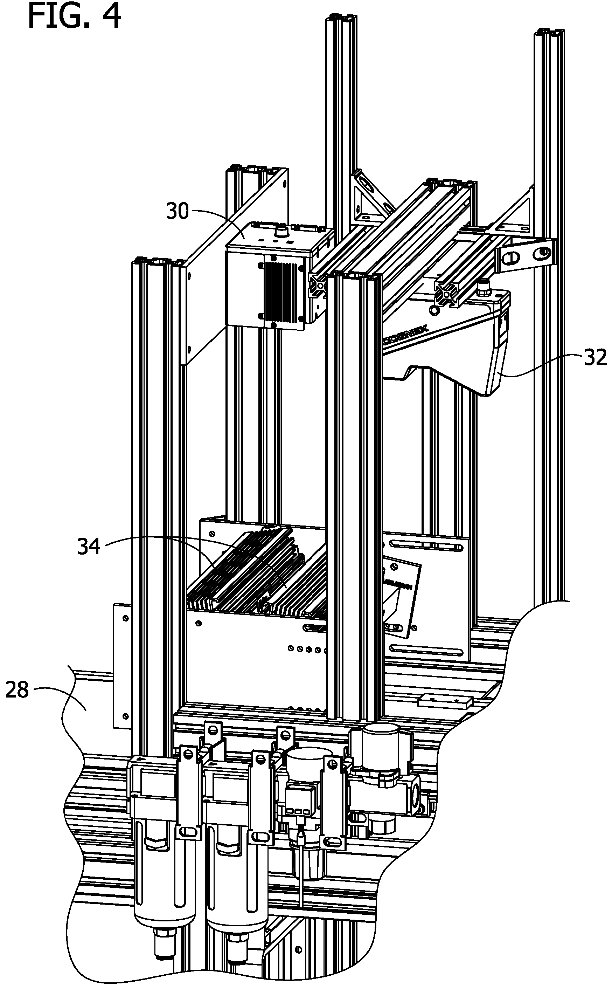

Referring to Figs. 3-5A, the imaging and analysis assembly 14 comprises an imaging assembly including a 2D line scan RBG camera (broadly, a 2D camera) 30 and a 3D line laser profiler (broadly, a 3D camera) 32 mounted above the conveyor 26 for acquiring image data of the seeds to measure the size and shape of the seeds in three dimensions. The imaging and analysis assembly 14 also includes a processor and memory for processing (i.e., analyzing) the image data, although in other embodiments the controller 18 may be used for such processing. The imaging and analysis assembly 14 can obtain length, width, and thickness (or roundness) dimensions for the seeds. Additionally, a light source 34 (Fig. 4) may be mounted above the conveyor 26 for illuminating the fields of view of the cameras 30, 32 to assist in producing clear and bright images. In one embodiment, the 2D camera 30 is mounted above the conveyor 26 in a substantially vertically orientation such that a focal axis of the 2D camera extends perpendicular to a horizontal plane of the conveyor, and the 3D camera 32 is mounted above the conveyor at an angle skewed from vertical such that a focal axis of the 3D camera extends at a non-orthogonal angle to the plane of the conveyor. With the 2D camera 30 pointed directly downward, the major and minor axes of the 2D camera image are interpreted as length and width dimensions, respectively. Therefore, as the seeds pass through the focal window of the 2D camera 30, length and width dimensions of each seed are recorded. The pixels of the 2D camera 30 may be calibrated for true x-y dimensions. It is envisioned that the 2D camera 30 could be oriented such that the major and minor axes define width and length dimensions, respectively, without departing from the scope of the disclosure. In one embodiment, the shortest and longest axes define the width and length dimensions. This axis interpretation assumes that the seed is lying on its side such that the length of the seeds extends along the conveyor surface. However, it the seed is standing upright, the system automatically adjusts to ensure the height, width, and thickness measurements are recorded correctly.

The 3D camera 32 uses a laser triangulation technique to projects a line laser to create a line profile of the seed's surface. The 3D camera 32 measures the line profile to determine displacement which is represented by an image of the seed showing varying pixel intensities. A thickness dimension of the seeds is obtained through the pixel intensity of the 3D image produced by the 3D camera 32. For example, a maximum pixel intensity can be interpreted as a marker of seed thickness. Thus, as the seeds pass through the focal window of the 3D camera 32, a thickness of each seed is recorded as the maximum pixel intensity detected by the 3D camera for each seed. To acquire an accurate thickness measurement, it may be necessary to calibrate the image intensity of the 3D camera 32 based on the distance the 3D camera is spaced from the surface of the conveyor 26. Using the length and width dimensions acquired from the 2D camera 30 and the thickness dimensions acquired from the 3D camera 32, the system 10 can obtain volume estimates for each seed. In another embodiment, more sophisticated image processing may be used to estimate volume from a detailed contour map of the top half of each seed. For a known or estimated weight of the seed, the volume data can be used to estimate seed density. One example of a suitable 2D camera is the CV-L107CL model by JAI. One example of a suitable 3D camera is the DS1101R model by Cognex. In another embodiment, a different 3D measurement technique such as Time-of-Flight cameras, Stereo Imaging, Light field technique, and others can be used in place of or together with the laser profiler to get the 3D measurements of the seed.

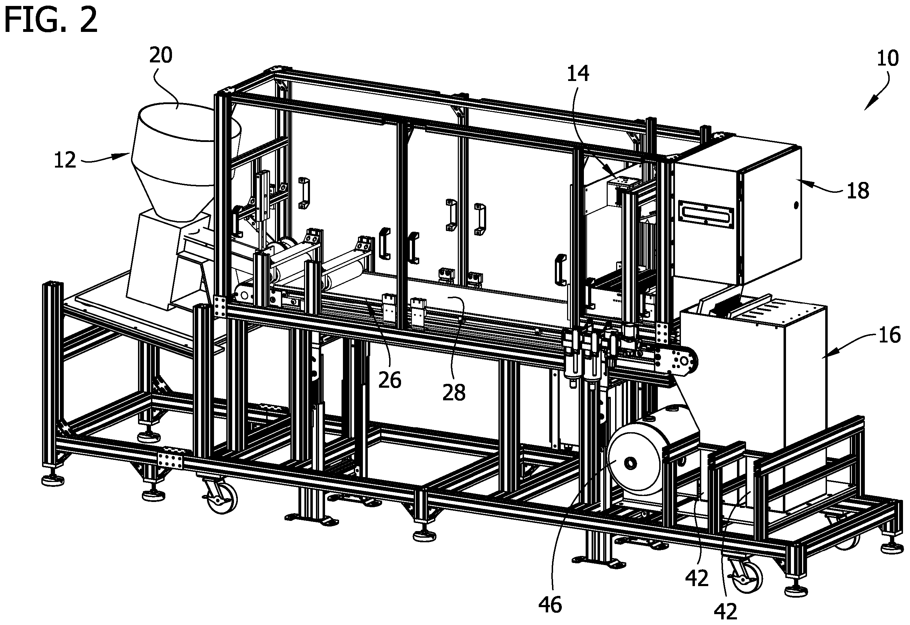

Referring to Figs. 2, 3, and 5-5B, the sorting assembly 16 comprises a plurality of high speed air valve banks 40 and a plurality of sorting bins 42 located at an end of the conveyor 26 for sorting the seeds into at least two different categories based on the measurements obtained by the imaging and analysis assembly 14. Each valve bank 40 includes multiple air valves 44 in fluid communication with an air compressor 46 for producing burst of air directed at the seeds as they are expelled from the conveyor 26. The air is used to redirect the flight of the seeds so that the seeds land in a selected sorting bin 42 corresponding to the characteristics of the seeds identified by the imaging and analysis assembly 14. As previously mentioned, the seeds are tracked by a high precision encoder (not shown). Thus, the system 10 can monitor the path of the seeds and predict when and where the seeds will be expelled from the conveyor 26. Therefore, the system 10 can predict the location and flight of each seed as it leaves the conveyor 26. This information is used by the controller 18 to instruct the operation of the valves 44 in the valve banks 40. In one embodiment, each valve bank 40 includes thirty two (32) air valves 44. However, a different number or air valves is envisioned without departing from the scope of the disclosure. The array of valves 44 is provided in an adequate number and arrangement to locate the valves in position to accommodate the random placement of the seeds on the conveyor.

In the illustrated embodiment, there are two (2) valve banks 40 selectively positioned for sorting the seeds into three (3) sorting bins 42. A first sorting bin 42a is located closest to the conveyor 26, a second sorting bin 42b is located next to the first sorting bin and located farther from the conveyor than the first sorting bin, and a third sorting bin 42c is located next to the second sorting bin and spaced farther from the conveyor than the second sorting bin. Thus, the second sorting bin 42b is located between the first and third sorting bins 42a, 42c. A first valve bank 40a is disposed generally over the first sorting bin 42a and directed downward such that the bursts of air from the valves 44 in the first valve bank create a downward diverting force along a substantially vertical axis. This downward diverting force can redirect the path of a seed as it leaves the conveyor 26 so that the seed falls into the first sorting bin 42. A second valve bank 40b is disposed in the second sorting bin 42b and directed upward at an angle toward the third sorting bin 42c. Therefore, the bursts of air produced by the valves in the second valve bank 40b create an upward diverting force along an angled axis so that seeds leaving the conveyor 26 can be diverted away from the second sorting bin 42b and into the third sorting bin 42c. Thus, if a seed is not redirected by either of the valve banks 40a, 40b, the seed will land in the second valve bin 42b as a result of the natural trajectory of the seed leaving the conveyor 26. It will be understood that the conveyor 26 can be operated and/or the sorting bins 42 can be positioned so that the natural flight of the seeds will land the seeds in either the first or third sorting bin 42a, 42c.

In the illustrated embodiment, the second valve bank 40b is angled at a 45 degree angle. However, the second valve bank 40b could be oriented at a different angle without departing from the scope of the disclosure. Also, it will be understood that the valve banks 40a, 40b could be located in different positions to redirect the seeds along different paths. For example, in one embodiment, a natural trajectory of the seeds may cause them to fall into the first sorting bin 42a. In this instance, a valve bank may be located in the first sorting bin to redirect the seeds into the second sorting bin. Moreover, additional valve banks could be used for sorting the seeds into more than three bins. In this embodiment, each valve bank would direct the seeds into a specific bin. For example, a first valve bank would direct the seeds into the first sorting bin 42a, a second valve bank would be positioned to direct the seeds into the second sorting bin 42b, and a third valve bank would be positioned to direct the seeds into the third sorting bin 42c. The seeds natural trajectory would carry them to a fourth sorting bin (not shown) when not disturbed by air from any of the valves.

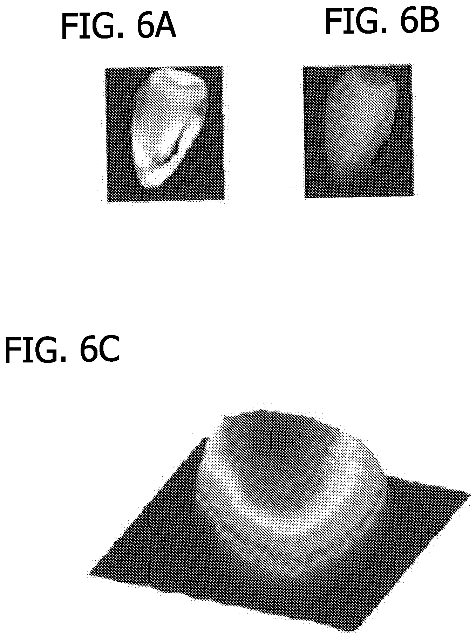

Referring to Fig, 5, seeds are first placed in the hopper 20 in preparation of being transported by the conveyor 26 through the system 10. As the seeds leave the outlet 24 of the hopper 20, the conveyor carries the seeds into view of the 2D camera 30 and 3D camera 32. Because the seeds travel along the flat, blue conveyor 26, clear image data are acquired. Additionally, the seeds remain in a known location and fixed orientation which allows each seed to be tracked with a high level of accuracy by the precision encoder. The seeds first pass under the focal view of the 2D camera 30. The 2D camera 30 acquires a 2-dimensional image of each seed which is processed by the controller 18 to produce length and width data for each seed. In one embodiment, the value associated with a maximum length and width measurements are recorded as the length and width values for the seed. Figure 6A shows a representative image acquired by the 2D camera 30. An encoder reading is also recorded as the seed is imaged by the 2D camera 30 to track the position of the seed on the conveyor 26.

The seeds continue to travel along the conveyor 26 until the seeds pass under the focal view of the 3D camera. 32. The 3D camera 32 acquires a 3-dimensional image of each seed which is processed by the controller 18 to produce thickness data for each seed. Figure 6B shows a representative image acquired by the 3D camera 32. Using the 3D image, the controller 18 produces the surface profile shown in Fig. 6C. The different colors of the surface profile indicate thickness. In the illustrated embodiment, the thickness increases from blue to red. Analysis of the surface profile provides a thickness measurement for a given seed. In one embodiment, the value associated with the thickest region is recorded as the thickness value for the seed. An encoder reading is also recorded as the seed is imaged by the 3D camera 32 to track the position of the seed on the conveyor 26. It will be understood that the analysis of the surface profile can also provide information regarding seed volume and mechanical seed damage.

Based on the length and width data from the 2D camera 30, and the thickness data from the 3D camera 32, the controller 18 can identify and categorize each seed according to its size. For example, predetermined size categories may be stored in the controller 18. The size categories may be based on dimension thresholds for each of the length, width, and thickness data. Based on these thresholds, at least two categories can be defined. Each sorting bin 42 is representative of a category. Thus, in the illustrated embodiment, three categories are defined. As each seed is analyzed the seed is associated with one of the categories. For example, a seed having one or more dimensions that exceed a threshold valve are categorized into a first category, and seeds having one or more dimensions that are within a threshold valve are categorized into a second category. Multiple threshold values may be established to further categorize the seeds into more than two categories. Once the seed reaches the end of the conveyor 26, the valve banks 40 are operated by the controller 18 to divert the seed into the bin 42 associated with its designated category.

The information obtained using the imaging and analysis assembly 14 can be useful in the subsequent processing, assessment, or analysis of the seeds. For example, in seed production plants, the data generated by the system 10 can be used to predict an overall distribution of seeds of different size and shapes in a seed inventory, and to determine size and shape distribution of a sub sample of seeds which can then be extrapolated to predict the overall seed inventory status. This distribution information may also be used to adjust sizing thresholds slightly in cases where seed quantities are limited in some size categories. The sorted seeds can also be used in seed quality labs for assessing seed quality for each size and shape category. Additionally, even without the sorting assembly 16, the imaging assembly 14 provides useful information by collecting the real time distribution of seed sizes in a flow of seeds. In this case, the entire flow of seeds can be measured, or a "slip stream" that is a statistically valid subset of the total flow can be measured to determine the size makeup of the flow.

## Claims

1. A seed sorting system for sorting seeds, the system comprising:
a seed transfer station configured to move seeds through the system comprising a conveyor;
an imaging assembly comprising a 2D camera configured to acquire 2D images of the seeds as the seeds move through the system and a 3D camera configured to acquire 3D images of the seeds as the seeds move through the system, the 2D and the 3D cameras being mounted above the conveyor;
a sorting assembly configured to sort the seeds into separate bins based on the acquired 2D and 3D images of the seeds; and
a controller configured to determine length and width dimensions of the seeds from the acquired 2D images and thickness dimensions of the seeds from the acquired 3D images and to control the sorting assembly to sort the seeds based on the determined length and width dimensions of the seeds from the acquired 2D images and the determined thickness dimensions of the seeds from the acquired 3D images;
wherein the sorting assembly comprises a plurality of high speed air valve banks and a plurality of sorting bins located at an end of the conveyor, the valve banks being operable by the controller to sort the seeds into the sorting bins as the seeds leave the seed transfer station, each valve bank including multiple air valves in fluid communication with an air compressor for producing burst of air directed at the seeds as they are expelled from the conveyor,
wherein the burst of air redirects the flight of the seeds so that the seeds land in a selected sorting bin corresponding to the characteristics of the seeds identified by the controller, and
wherein the multiple air valves is provided in an array with an adequate number and arrangement to locate the valves in position to accommodate a random placement of the seeds on the conveyor.

2. The seed sorting system of claim 1, wherein the controller is configured to produce a surface profile of each of the 3D images, the controller configured to measure a pixel intensity of the surface profile to determine the thickness dimension.

3. The seed sorting system of claim 1, wherein the 2D camera has a focal axis extending in a substantially vertical direction.

4. The seed sorting system of claim 3, wherein the 3D camera has a focal axis extending in a direction skewed from vertical.

5. The seed sorting system of claim 1, wherein the conveyor comprises a belt configured to transport the seeds in a substantially horizontal direction.

6. The seed sorting system of claim 5, wherein the conveyor is blue.

7. The seed sorting system of claim 1, wherein the sorting assembly comprises at least two valve banks and at least three sorting bins.

8. The seed sorting system of claim 7, wherein a first valve bank is mounted over a first sorting bin and is directed downward in a substantially vertical orientation, and the second valve bank is mounted in a second sorting bin and is directed upward at an angle toward a third sorting bin

9. The seed sorting system of claim 8, wherein the seed transfer station is configured to direct seeds into the second sorting bin, the first valve bank being operable to direct seeds away from the second sorting bin and into the first sorting bin, and the second valve bank being operable to direct seeds away from the second sorting bin and into the third sorting bin.

10. A method of sorting seeds using a seed sorting system, the method comprising:
moving seeds through the system using a seed transfer stationcomprising a conveyor;
acquiring, using a 2D camera, 2D images of the seeds as the seeds move through the system via the seed transfer station;
acquiring, using a 3D camera, 3D images of the seeds as the seeds move through the system via the seed transfer station;
analyzing the 2D and 3D images to determine a parameter of each of the, using a controller, said parameter comprising length and width dimensions of the seeds from the acquired 2D images and thickness dimensions of the seeds from the acquired 3D images; and
sorting, using a sorting assembly, the seeds based on determined parameters of the seeds,
wherein the sorting assembly comprises a plurality of high speed valve banks and a plurality of sorting bins located at the end of the conveyor, the valve banks is operated by the controller to sort the seeds into the sorting bins as the seeds leave the seed transfer station, each valve bank including multiple air valves in fluid communication with an air compressor for producing burst of air directed at the seeds as they are expelled from the seed transfer station,
wherein the air redirects the flight of the seeds so that the seeds land in a selected sorting bin corresponding to the characteristics of the seeds identified by the controller, and wherein the multiple air valves is provided in an array with an adequate number and arrangement to locate the valves in position to accommodate a random placement of the seeds on the conveyor.

11. The method of claim 10, further comprising categorizing, using the controller, each of the seeds based on the determined parameter of the seed.

12. The method of claim 10, further comprising producing, using a controller, a surface profile of the 3D images and measuring, using the controller, a pixel intensity of the surface profile to determine the thickness dimensions.

13. The method of claim 12, further comprising measuring, using the controller, volume and seed damage from the acquired 3D images.

14. The method of claim 10, wherein said moving the seeds through the system comprises moving the seeds via the conveyor in a substantially horizontal direction.

15. The method of claim 14, wherein said moving the seeds through the system comprises operating the conveyor at a speed of at least about 0,75m/s (30 in/sec)

16. The method of claim 14, wherein said moving the seeds through the system comprises operating the conveyor at a speed of at least about 1,5 m/s (60 in/sec)

17. The method of claim 14, wherein said moving the seeds through the system comprises operating the conveyor at a speed of at least about 5 m/s (200 in/sec)

18. The method of claim 10, wherein said sorting the seeds comprises sorting the seeds into at least three separate sorting bins.

19. The method of claim 18, wherein said sorting the seeds comprises operating at least two valve banks to sort the seeds into the at least three sorting bins.

20. The seed sorting system of claim 1, wherein each valve bank includes thirty-two air valves.

## Patentansprüche

1. Saatgut-Sortiersystem zum Sortieren von Samen, wobei das System Folgendes umfasst:
eine Saatgut-Transferstation, die dazu ausgelegt ist, Samen durch das System zu bewegen, das einen Förderer umfasst;
eine Bildgebungsanordnung, die eine 2D-Kamera umfasst, die konfiguriert ist, um 2D-Bilder der Samen zu erfassen, während sich die Samen durch das System bewegen, und eine 3D-Kamera, die konfiguriert ist, um 3D-Bilder der Samen zu erfassen, während sich die Samen durch das System bewegen, wobei die 2D- und die 3D-Kamera oberhalb des Förderers angebracht sind;
eine Sortieranordnung, die so konfiguriert ist, dass sie die Samen basierend auf den erfassten 2D- und 3D-Bildern der Samen in getrennte Fächer sortiert; und
eine Steuerung, die so konfiguriert ist, dass sie die Längen- und Breitenabmessungen der Samen aus den erfassten 2D-Bildern und die Dickenabmessungen der Samen aus den erfassten 3D-Bildern bestimmt und die Sortieranordnung so steuert, dass sie die Samen basierend auf den bestimmten Längen- und Breitenabmessungen der Samen aus den erfassten 2D-Bildern und den bestimmten Dickenabmessungen der Samen aus den erfassten 3D-Bildern sortiert;
wobei die Sortieranordnung eine Vielzahl von Hochgeschwindigkeits-Luftventilbänken und eine Vielzahl von Sortierbehältern umfasst, die an einem Ende des Förderers angeordnet sind, wobei die Ventilbänke von der Steuerung betätigt werden können, um die Samen in die Sortierbehälter zu sortieren, wenn die Samen die Saatgut-Transferstation verlassen, wobei jede Ventilbank mehrere Luftventile in Fluidverbindung mit einem Luftkompressor enthält, um einen Luftstoß zu erzeugen, der auf die Samen gerichtet ist, wenn sie von dem Förderer ausgestoßen werden, wobei der Luftstoß den Flug der Samen so umleitet, dass die Samen in einem ausgewählten Sortierbehälter landen, der den von der Steuerung identifizierten Eigenschaften der Samen entspricht, und wobei die mehreren Luftventile in einer Anordnung mit einer angemessenen Anzahl und Anordnung vorgesehen sind, um die Ventile in einer Position zu positionieren, die eine zufällige Platzierung der Samen auf dem Förderer ermöglicht.

2. Saatgut-Sortiersystem nach Anspruch 1, wobei die Steuerung dazu ausgelegt ist, ein Oberflächenprofil jedes der 3D-Bilder zu erzeugen, wobei die Steuerung dazu ausgelegt ist, eine Pixelintensität des Oberflächenprofils zu messen, um die Dickenabmessung zu bestimmen.

3. Saatgut-Sortiersystem nach Anspruch 1, wobei die 2D-Kamera eine Fokalachse aufweist, die sich in einer im Wesentlichen vertikalen Richtung erstreckt.

4. Saatgut-Sortiersystem nach Anspruch 3, wobei die 3D-Kamera eine Fokalachse aufweist, die in einer von der Vertikalen abweichenden Richtung verläuft.

5. Saatgut-Sortiersystem nach Anspruch 1, wobei der Förderer ein Band umfasst, das dazu ausgelegt ist, die Samen in einer im Wesentlichen horizontalen Richtung zu transportieren.

6. Saatgut-Sortiersystem nach Anspruch 5, wobei der Förderer blau ist.

7. Saatgut-Sortiersystem nach Anspruch 1, wobei die Sortieranordnung mindestens zwei Ventilbänke und mindestens drei Sortierbehälter umfasst.

8. Saatgut-Sortiersystem nach Anspruch 7, wobei eine erste Ventilbank über einem ersten Sortierbehälter montiert ist und in einer im Wesentlichen vertikalen Ausrichtung nach unten gerichtet ist und die zweite Ventilbank in einem zweiten Sortierbehälter montiert ist und in einem Winkel zu einem dritten Sortierbehälter nach oben gerichtet ist.

9. Saatgut-Sortiersystem nach Anspruch 8, wobei die Saatgut-Transferstation dazu ausgelegt ist, Samen in den zweiten Sortierbehälter zu leiten, wobei die erste Ventilbank dazu betreibbar ist, Samen von dem zweiten Sortierbehälter weg und in den ersten Sortierbehälter zu leiten, und wobei die zweite Ventilbank dazu betreibbar ist, Samen von dem zweiten Sortierbehälter weg und in den dritten Sortierbehälter zu leiten.

10. Verfahren zum Sortieren von Samen unter Verwendung eines Saatgut-Sortiersystems, wobei das Verfahren Folgendes umfasst:
Bewegen von Samen durch das System unter Verwendung einer Saatgut-Transferstation, die einen Förderer umfasst;
Erfassen, unter Verwendung einer 2D-Kamera, von 2D-Bildern der Samen, während sich die Samen über die Saatgut-Transferstation durch das System bewegen;
Erfassen, unter Verwendung einer 3D-Kamera, von 3D-Bildern der Samen, während sich die Samen über die Saatgut-Transferstation durch das System bewegen;
Analysieren der 2D- und 3D-Bilder, um unter Verwendung einer Steuerung einen Parameter für jedes der zu bestimmen, wobei der Parameter Längen- und
Breitenabmessungen der Samen aus den erfassten 2D-Bildern und Dickenabmessungen der Samen aus den erfassten 3D-Bildern umfasst; und
Sortieren, unter Verwendung einer Sortieranordnung, der Samen basierend auf bestimmten Parametern der Samen,
wobei die Sortieranordnung eine Vielzahl von Hochgeschwindigkeits-Ventilbänken und eine Vielzahl von Sortierbehältern umfasst, die am Ende des Förderers angeordnet sind, wobei die Ventilbänke von der Steuerung betätigt werden, um die Samen in die Sortierbehälter zu sortieren, wenn die Samen die Saatgut-Transferstation verlassen, wobei jede Ventilbank mehrere Luftventile in Fluidverbindung mit einem Luftkompressor umfasst, um einen Luftstoß zu erzeugen, der auf die Samen gerichtet ist, wenn sie aus der Saatgut-Transferstation ausgestoßen werden, wobei die Luft den Flug der Samen so umlenkt, dass die Samen in einem ausgewählten Sortierbehälter landen, der den von der Steuerung identifizierten Eigenschaften der Samen entspricht, und wobei die mehreren Luftventile in einer Anordnung mit einer angemessenen Anzahl und Anordnung vorgesehen sind, um die Ventile in einer Position zu positionieren, um eine zufällige Platzierung der Samen auf dem Förderer zu ermöglichen.

11. Verfahren nach Anspruch 10, ferner umfassend die Verwendung einer Steuerung zur Kategorisierung jedes Samens, basierend auf dem bestimmten Parameter des Samens.

12. Verfahren nach Anspruch 10, ferner umfassend das Erzeugen eines Oberflächenprofils der 3D-Bilder unter Verwendung einer Steuerung und das Messen einer Pixelintensität des Oberflächenprofils unter Verwendung der Steuerung, um die Dickenabmessungen zu bestimmen.

13. Verfahren nach Anspruch 12, ferner umfassend das Messen, unter Verwendung einer Steuerung, von Volumen- und Samenschäden aus den aufgenommenen 3D-Bildern.

14. Verfahren nach Anspruch 10, wobei das Bewegen der Samen durch das System das Bewegen der Samen über den Förderer in einer im Wesentlichen horizontalen Richtung umfasst.

15. Verfahren nach Anspruch 14, wobei das Bewegen der Samen durch das System das Betreiben des Förderers mit einer Geschwindigkeit von mindestens etwa 0,75 m/s (30 in/sec) umfasst.

16. Verfahren nach Anspruch 14, wobei das Bewegen der Samen durch das System das Betreiben des Förderers mit einer Geschwindigkeit von mindestens etwa 1,5 m/s (60 in/sec) umfasst.

17. Verfahren nach Anspruch 14, wobei das Bewegen der Samen durch das System das Betreiben des Förderers mit einer Geschwindigkeit von mindestens etwa 5 m/s (200 in/sec) umfasst.

18. Verfahren nach Anspruch 10, wobei das Sortieren der Samen das Sortieren der Samen in mindestens drei separate Sortierbehälter umfasst.

19. Verfahren nach Anspruch 18, wobei das Sortieren der Samen das Betreiben von mindestens zwei Ventilbänken umfasst, um die Samen in die mindestens drei Sortierbehälter zu sortieren.

20. Saatgut-Sortiersystem nach Anspruch 1, wobei jede Ventilbank zweiunddreißig Luftventile aufweist.

## Revendications

1. Système de tri de graines destiné à trier des graines, le système comprenant :
une station de transfert de graines configurée pour déplacer les graines à travers le système comprenant un convoyeur ;
un ensemble **d'imagerie** comprenant une caméra 2D configurée pour acquérir des images 2D des graines lorsque celles-ci se déplacent à travers le système et une caméra 3D configurée pour acquérir des images 3D des graines lorsque celles-ci se déplacent à travers le système, les caméras 2D et 3D étant montées au-dessus du convoyeur ;
un ensemble de tri configuré pour trier les graines dans des bacs séparés sur la base des images 2D et 3D acquises des graines ; et
un contrôleur configuré pour déterminer les dimensions en longueur et en largeur des graines à partir des images 2D acquises et les dimensions en épaisseur des graines à partir des images 3D acquises, et pour commander l'ensemble de tri afin de trier les graines en fonction des dimensions en longueur et en largeur déterminées des graines à partir des images 2D acquises et des dimensions en épaisseur déterminées des graines à partir des images 3D acquises ;
où l'ensemble de tri comprend une pluralité de batteries de vannes pneumatiques à grande vitesse et une pluralité de bacs de tri situés à une extrémité du convoyeur, les batteries de vannes pouvant être actionnées par le contrôleur pour trier les graines dans les bacs de tri lorsque les graines quittent la station de transfert de graines, chaque batterie de vannes comprenant plusieurs vannes pneumatiques en communication fluidique avec un compresseur d'air pour produire des jets d'air dirigés vers les graines lorsqu'elles sont expulsées du convoyeur, où le jet d'air redirige la trajectoire des graines de manière à ce que celles-ci atterrissent dans un bac de tri sélectionné correspondant aux caractéristiques des graines identifiées par le contrôleur, et où les multiples vannes pneumatiques sont disposées en réseau en nombre adéquat et selon une configuration adéquate pour positionner les vannes de manière à s'adapter à un placement aléatoire des graines sur le convoyeur.

2. Système de tri de graines selon la revendication 1, dans lequel le contrôleur est configuré pour produire un profil de surface de chacune des images 3D, le contrôleur étant configuré pour mesurer une intensité de pixel du profil de surface afin de déterminer la dimension d'épaisseur.

3. Système de tri de graines selon la revendication 1, dans lequel la caméra 2D a un axe focal s'étendant dans une direction sensiblement verticale.

4. Système de tri de graines selon la revendication 3, dans lequel la caméra 3D a un axe focal s'étendant dans une direction inclinée par rapport à la verticale.

5. Système de tri de graines selon la revendication 1, dans lequel le convoyeur comprend une bande configurée pour transporter les graines dans une direction sensiblement horizontale.

6. Système de tri de graines selon la revendication 5, dans lequel le convoyeur est bleu.

7. Système de tri de graines selon la revendication 1, dans lequel l'ensemble de tri comprend au moins deux batteries de vannes et au moins trois bacs de tri.

8. Système de tri de graines selon la revendication 7, dans lequel une première batterie de vannes est montée au-dessus d'un premier bac de tri et est dirigée vers le bas dans une orientation sensiblement verticale, et la deuxième batterie de vannes est montée dans un deuxième bac de tri et est dirigée vers le haut selon un angle vers un troisième bac de tri.

9. Système de tri de graines selon la revendication 8, dans lequel la station de transfert de graines est configurée pour diriger les graines vers le deuxième bac de tri, la première batterie de vannes pouvant être actionnée pour diriger les graines loin du deuxième bac de tri et vers le premier bac de tri, et la deuxième batterie de vannes pouvant être actionnée pour diriger les graines loin du deuxième bac de tri et vers le troisième bac de tri.

10. Procédé de tri de graines à l'aide d'un système de tri de graines, le procédé comprenant les étapes suivantes :
déplacer les graines à travers le système à l'aide d'une station de transfert de graines comprenant un convoyeur ;
acquérir, à l'aide d'une caméra 2D, des images 2D des graines lorsque les graines se déplacent à travers le système par l'intermédiaire de la station de transfert de graines ;
acquérir, à l'aide d'une caméra 3D, des images 3D des graines lorsque les graines se déplacent à travers le système par l'intermédiaire de la station de transfert de graines ;
analyser les images 2D et 3D afin de déterminer un paramètre de chacune des, à l'aide d'un contrôleur, ledit paramètre comprenant les dimensions en longueur et en largeur des graines à partir des images 2D acquises et les dimensions en épaisseur des graines à partir des images 3D acquises ; et
trier, à l'aide d'un ensemble de tri, les graines sur la base des paramètres déterminés des graines,
où l'ensemble de tri comprend une pluralité de batteries de vannes à grande vitesse et une pluralité de bacs de tri situés à l'extrémité du convoyeur, les batteries de vannes étant actionnées par le contrôleur pour trier les graines dans les bacs de tri lorsque les graines quittent la station de transfert de graines, chaque batterie de vannes comprenant plusieurs vannes pneumatiques en communication fluidique avec un compresseur d'air pour produire des jets d'air dirigés vers les graines lorsqu'elles sont expulsées de la station de transfert de graines, où l'air redirige la trajectoire des graines de manière à ce que celles-ci atterrissent dans un bac de tri sélectionné correspondant aux caractéristiques des graines identifiées par le contrôleur, et où les multiples vannes pneumatiques sont disposées en réseau en nombre adéquat et selon une configuration adéquate pour positionner les vannes de manière à s'adapter à un placement aléatoire des graines sur le convoyeur.

11. Procédé selon la revendication 10, comprenant en outre de catégoriser, à l'aide du contrôleur, chacune des graines sur la base du paramètre déterminé de la graine.

12. Procédé selon la revendication 10, comprenant en outre de produire, à l'aide d'un contrôleur, un profil de surface des images 3D et de mesurer, à l'aide du contrôleur, une intensité de pixel du profil de surface afin de déterminer les dimensions d'épaisseur.

13. Procédé selon la revendication 12, comprenant en outre de mesurer, à l'aide du contrôleur, le volume et des dommages subis par les graines à partir des images 3D acquises.

14. Procédé selon la revendication 10, dans lequel ledit déplacement des graines à travers le système comprend le déplacement des graines par l'intermédiaire du convoyeur dans une direction sensiblement horizontale.

15. Procédé selon la revendication 14, dans lequel ledit déplacement des graines à travers le système comprend de faire fonctionner le convoyeur à une vitesse d'au moins environ 0,75 m/s (30 pouces/seconde).

16. Procédé selon la revendication 14, dans lequel ledit déplacement des graines à travers le système comprend de faire fonctionner le convoyeur à une vitesse d'au moins environ 1,5 m/s (60 pouces/seconde).

17. Procédé selon la revendication 14, dans lequel ledit déplacement des graines à travers le système comprend de faire fonctionner le convoyeur à une vitesse d'au moins environ 5 m/s (200 pouces/seconde).

18. Procédé selon la revendication 10, dans lequel ledit tri des graines comprend de trier les graines dans au moins trois bacs de tri séparés.

19. Procédé selon la revendication 18, dans lequel ledit tri des graines comprend de faire fonctionner au moins deux batteries de vannes pour trier les graines dans les au moins trois bacs de tri.

20. Système de tri de graines selon la revendication 1, dans lequel chaque batterie de vannes comprend trente-deux vannes pneumatiques.
